# EUROPEAN PATENT SPECIFICATION

(11) **EP 4 365 474 B1**
(45) Date of publication and mention of the grant of the patent: **06.05.2026**
(21) Application number: 22831838.2
(22) Date of filing: 23.06.2022
(51) Int. Cl.: F16L 59/065, F16L 59/02, F25D 23/06, F25D 23/08, B32B 3/02

(54) **THERMAL INSULATION BOARD AND PREPARATION METHOD THEREFOR AND REFRIGERATOR USING THERMAL INSULATION BOARD**
WÄRMEDÄMMPLATTE UND HERSTELLUNGSVERFAHREN DAFÜR SOWIE KÜHLSCHRANK MIT DER WÄRMEDÄMMPLATTE
PANNEAU D'ISOLATION THERMIQUE ET SON PROCÉDÉ DE PRÉPARATION ET RÉFRIGÉRATEUR UTILISANT UN PANNEAU D'ISOLATION THERMIQUE

(30) Priority: 28.06.2021 CN 202110718600
(43) Date of publication of application: 08.05.2024
(73) Proprietor: Qingdao Haier Special Refrigeration Electric Appliance Co., Ltd., Shandong 266426 (CN); Qingdao Haier Refrigerator Co., Ltd, Qingdao, Shandong 266101 (CN); Haier Smart Home Co., Ltd., Qingdao, Shandong 266101 (CN)
(72) Inventor: LIU, Zhanzhan, Qingdao, Shandong 266101 (CN); WANG, Haijuan, Qingdao, Shandong 266101 (CN); CHENG, Xueli, Qingdao, Shandong 266101 (CN)
(74) Representative: Winter, Brandl - Partnerschaft mbB
(86) International application number: PCT/CN2022/100768
(87) International publication number: WO 2023/274022

(56) References cited:
- EP-A2- 0 822 379
- WO-A1-2016/162955
- CN-A- 104 964 124
- CN-A- 105 371 580
- CN-A- 107 461 569
- CN-A- 107 461 569
- CN-A- 109 707 954
- CN-A- 110 296 573
- CN-B- 102 401 216
- CN-U- 201 739 710
- CN-U- 205 316 798
- JP-A- 2001 295 985
- JP-A- 2011 153 721
- JP-A- 2014 005 887
- JP-A- H11 201 379
- US-A1- 2020 355 424
- US-B2- 10 603 865

## Description

### TECHNICAL FIELD

This invention relates to the field of refrigeration appliances, and in particular, to an insulating panel, preparation method, as well as a refrigerator with the insulating panel.

### BACKGROUND

Vacuum insulation panels, a type of vacuum insulation material, are composed of a core material and a vacuum protective layer. They effectively prevent heat transfer caused by air convection. Currently, the application of vacuum insulation panels in refrigerators involves directly affixing flat vacuum insulation panels to the relatively flat surface of the refrigerator's shell, followed by foam filling. However, to maintain the internal vacuum, vacuum insulation panels often use materials like aluminum foil or aluminum vapor deposition for the overlay material. Due to aluminum's high thermal conductivity, heat transfers directly from one side to the other through the overlay material, leading to the "thermal bridging effect" at the edges of the vacuum insulation panel, resulting in poor energy efficiency at the edges.

The existing technical solution involves adding a thin layer of insulation material between the vacuum insulation panel and the refrigerator shell during application. Since the size of the insulation material is smaller than that of the vacuum insulation panel, the edges of the vacuum insulation panel are suspended. During the foaming of polyurethane, the disorderliness of the foam material and the small thickness of the suspended space can lead to polyurethane not filling properly, resulting in voids and surface defects.

US 2020/355424 A1 relates to a vacuum adiabatic body and refrigerator, wherein the refrigerator provides a vacuum adiabatic body with a sealing part, a supporting unit, a heat resistance unit, and an exhaust port to improve adiabatic performance.

CN 102 401 216 B relates to a vacuum insulation material comprising a core material and an exterior cover material. The core material has a plurality of laminates, wherein a first laminate deforms and forms a concave portion to accommodate a heat sink tube. US 10 603 865 B2 relates to an insulating panel, comprising a vacuum insulation panel and insulating material; the vacuum insulation panel comprises a core material and a coating material, the coating material envelops the core material, and a vacuum is formed between the core material and the coating material; the insulating material is arranged to the sealing part, the insulating material is located on the same plane as the vacuum insulation panel, and the surface of the insulating material is used to attach to a refrigerator shell; wherein the adhered end surface of the insulating material and the vacuum insulation panel are in the same plane.

### SUMMARY

An object of the present invention is to provide an insulating panel and its preparation method, as well as a refrigerator with the insulating panel.

The invention is defined by the appended set of claims.

Compared to existing technologies, the disclosed insulating panel, preparation method, and a refrigerator with the insulating panel, reduce the heat transfer to the edges and inside of the vacuum insulation panel through the insulating material. This reduction lowers the "thermal bridging effect" at the edges of the vacuum insulation panel, thereby achieving effective thermal insulation.

### BRIEF DESCRIPTION OF THE DRAWINGS

FIG. 1 a longitudinal sectional view of a refrigerator in an embodiment of the invention;
FIG. 2 is a sectional view of the insulating panel in an embodiment of the invention;
FIG. 3 is a sectional view of the vacuum insulation panel in an embodiment of the invention;
FIG. 4 is a flow chart of the preparation method for the insulating panel in an embodiment of the invention.

### DETAILED DESCRIPTION

The present invention will be described in detail in conjunction with embodiments shown in the figures. However, the embodiments are not intended to limit the present invention. Structural, methodological or function variations made by those having ordinary skill in the art according to the embodiments are all included in the protection scope of the appended set of claims.

It should be appreciated that terms indicating spatial relative positions such as "up", "down", "in" and "out" used in the text herein are intended to describe a relationship of one unit or feature shown in figures relative to another unit or feature for an easy description purpose. The terms indicating spatial relative positions may be intended to include different orientations besides the orientations shown in the figures in use or operation of the device.

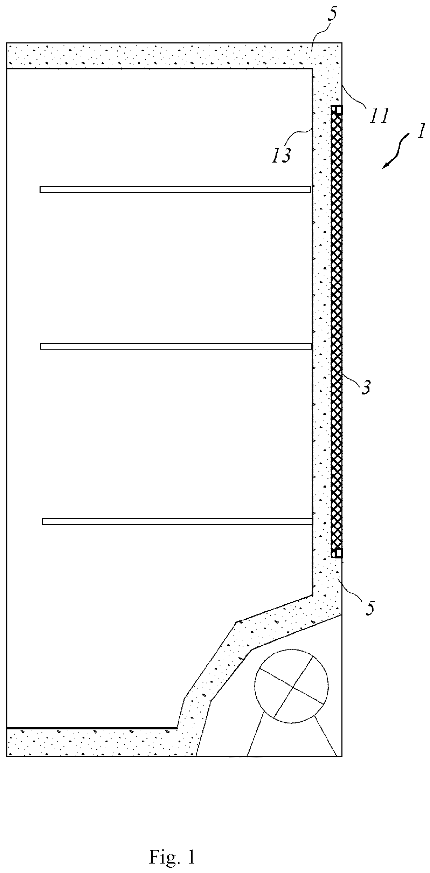

As shown in Figure 1, an embodiment of the invention provides a refrigerator 1, comprising a shell 11 and a liner 13, with an insulating panel 3 and foamed polyurethane 5 set between the shell 11 and the liner 13, and the surface of the insulating material 3 being attached to the shell 11.

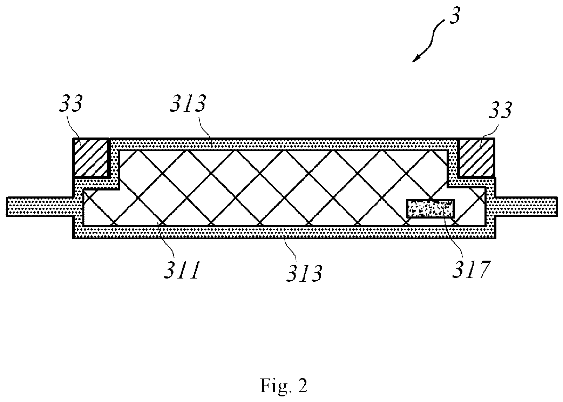

As shown in Figure 2, an embodiment of the invention provides an insulating panel 3, comprising a vacuum insulation panel 31 and insulating material 33.

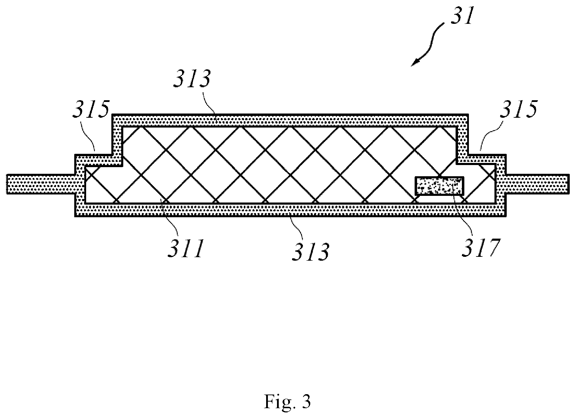

As shown in Figure 3, the vacuum insulation panel 31 comprises a core material 311 and a coating material 313, the core material 311 provides an annular groove 315 on one side, and the coating material 313 envelops the core material 311, and a vacuum is formed between the core material 311 and the coating material 313.

In this embodiment, the core material 311 comprises at least one of glass fiber, glass wool, and fumed silica; the coating material 313 is configured as aluminum foil or aluminum vapor deposition that can block external gases; the insulating material 33 comprises at least one of expanded polystyrene, foamed polyurethane, expanded polyethylene, and expanded polypropylene.

Further, an adsorbent 317 is provided inside the core material 311, which used for absorbing gases escaping from the core material 311, further maintaining the vacuum inside the vacuum insulation panel 31.

In this embodiment, the core material 311 provides an annular groove 315 on one side, and the coating material 313 is a flexible material like aluminum foil or aluminum vapor deposition, it is understandable that the vacuum insulation panel 31 also has an annular groove 315 structure, which formed by vacuuming after the coating material 313 envelops the core material 311.

In this embodiment, when the external heat of the refrigerator 1 is transferred to the insulating panel 3 through the shell 11, since the insulating material 33 is placed in the annular groove 315 after the coating material 313 is enveloped, and the insulating material 33 is in the same plane as the vacuum insulation panel 31, the thermal resistance of the insulating material 33 is higher than the thermal resistance of the coating material 313; and the external heat of the refrigerator is transferred to the edge of the vacuum insulation panel 31 and the internal heat through the edge of the insulating material 33 is reduced, this reduction lowers the "thermal bridging effect" at the edges of the vacuum insulation panel, also reducing the heat transferred to the inside of the refrigerator.

Additionally, in this embodiment, the top surface of the insulating material 33 and the vacuum insulation panel 31 are in the same plane, making the insulating panel 3 have a flat surface, that is convenient for attachment to applications like the refrigerator shell.

In this embodiment, the thickness of the annular groove 315 can be 1/2-2/3 of the thickness of the core material 311. The annular groove 315 can be positioned near the edge of the core material 311. Further, the annular groove 315 can be positioned such that one side end face is flush with the side end face of the core material 311. Since the insulating material 33 is placed in the annular groove 315 after the coating material 313 is enveloped, the end face of the adhered insulating material 33 and the end face of the vacuum insulation panel 31 are in the same plane, forming a rectangular cross-section for the insulating panel 3. With a rectangular cross-section, the path of heat transfer through the surface of the coating material 313 becomes longer, further reducing the heat transfer to the inside of the refrigerator, thus enhancing the thermal insulation effect of the insulating panel 3. Moreover, when the refrigerator shell 11 and liner 13 are filled with foamed polyurethane 5, the smooth and flat surface of the insulating panel3 avoids the formation of narrow spaces where the foamed polyurethane cannot fill, preventing voids and surface defects.

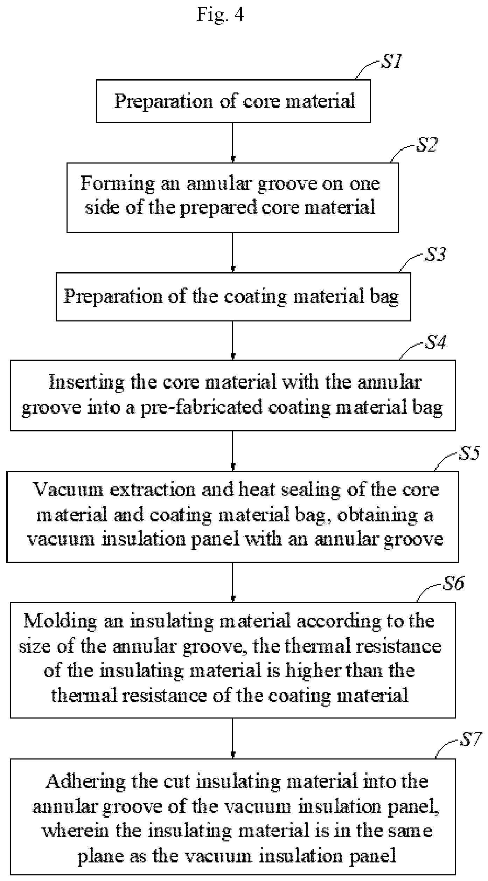

As shown in Figure 4, an embodiment of this invention provides a method for preparing an insulating panel, comprising the following steps:
S1. Preparation of core material.

The core material of the insulating panel is configured as integrally formed, or configured as laminated after made into unit sizes. It can be understood that any production method for preparing a core material of a conventional shape can be used. Wherein, the core material may be at least one of glass fiber, glass wool and fumed silica.

S2. Forming an annular groove on one side of the prepared core material.

Any conventional processing method, such as milling, can be chosen for creating the annular groove. Specifically, the thickness of the annular groove can be selected as 1/2-2/3 of the thickness of the core material, and the position of the annular groove can be near the edge of the core material's end face.

S3. Preparation of the coating material bag.

The coating material is cut after multi-layer compounding to form a coating material bag. Specifically, the coating material can be materials like aluminum foil or aluminum vapor deposition that can block external gases.

S4. Inserting the core material with the annular groove into a pre-fabricated coating material bag.

S5. Vacuum extraction and heat sealing of the core material and coating material bag, obtaining a vacuum insulation panel with an annular groove.

After vacuum extraction of the core material and coating material bag, the coating material bag is heat-sealed, resulting in a vacuum insulation panel with the annular groove.

S6. Molding an insulating material according to the size of the annular groove, the thermal resistance of the insulating material is higher than the thermal resistance of the coating material.

Molds are prepared according to the size of the annular groove, and insulating material is prepared within the molds. The insulating material may be at least one of expanded polystyrene, foamed polyurethane, expanded polyethylene, and expanded polypropylene, or other materials with higher thermal resistance than the coating material.

S7. Adhering the cut insulating material into the annular groove of the vacuum insulation panel, wherein the insulating material is in the same plane as the vacuum insulation panel.

In this embodiment, the cut insulating material has a relatively flat and smooth surface and can be fixed in the annular groove of the vacuum insulation panel using double-sided tape, roller glue, etc.

The method for preparing the insulating panel provided by this invention is simple and easy to produce and process; meanwhile, the produced insulating panel achieves effective thermal insulation.

In this embodiment, while processing the annular groove on the surface of the core material, a groove for accommodating an adsorbent is also created inside the core material, and an adsorbent is placed in it. The adsorbent can absorb gases escaping from within the core material, further ensuring the vacuum inside the insulating panel. Further, the adsorbent can be a calcium oxide adsorbent.

It should be understood that although this specification describes the invention according to embodiments, not every embodiment contains an independent technical solution. This manner of description is solely for clarity. Those skilled in the art should consider this specification as a whole.

## Claims

1. An insulating panel (3), comprising a vacuum insulation panel (31) and insulating material (33);
the vacuum insulation panel (31) comprises a core material (311) and a coating material (313),
wherein the core material (311) provides an annular groove (315) on one side, the coating material (313) envelops the core material (311), and a vacuum is formed between the core material (311) and the coating material (313);
the insulating material (33) is arranged in the annular groove (315) enveloped by the coating material (313), the insulating material (33) is located on the same plane as the vacuum insulation panel (31), and the thermal resistance of the insulating material (33) is higher than the thermal resistance of the coating material (313);
the surface of the insulating material (33) is used to attach to a refrigerator shell (11);
wherein one side end surface of the annular groove (315) is flush with the side end surface of the core material (311), so that the adhered end surface of the insulating material (33) and the vacuum insulation panel (31) are in the same plane.

2. The insulating panel (3) according to claim 1, wherein the coating material (313) is configured as aluminum foil or aluminum vapor deposition.

3. The insulating panel (3) according to claim 1, wherein the core material (311) comprises at least one of glass fiber, glass wool, and fumed silica.

4. The insulating panel (3) according to claim 1, wherein the insulating material (33) comprises at least one of expanded polystyrene, foamed polyurethane, expanded polyethylene, and expanded polypropylene.

5. The insulating panel (3) according to claim 1, wherein the thickness of the annular groove (315) is 1/2-2/3 of the thickness of the core material (311).

6. The insulating panel (3) according to claim 1, wherein an adsorbent (317) is provided inside the core material (311).

7. A refrigerator (1), comprising a shell (11) and a liner (13), wherein an insulating panel (3) according to any of claims 1 to 6 and foamed polyurethane (5) are provided between the refrigerator shell (11) and liner (13), with the surface of the insulating material (33) being attached to the refrigerator shell (11).

8. A method for preparing an insulating panel (3), wherein the method comprises the following steps: forming an annular groove (315) on one side of the prepared core material (311); inserting the core material (311) with the annular groove (315) into a pre-fabricated coating material bag; vacuum extraction and heat sealing of the core material (311) and coating material bag, obtaining a vacuum insulation panel (31) with the annular groove (315); molding an insulating material (33) according to the size of the annular groove (315), the thermal resistance of the insulating material (33) is higher than the thermal resistance of the coating material (313); adhering the cut insulating material (33) into the annular groove (315) of the vacuum insulation panel (31), wherein the insulating material (33) is in the same plane as the vacuum insulation panel (31);
the surface of the insulating material (33) is used to attach to a refrigerator shell;
wherein one side end surface of the annular groove (315) is flush with the side end surface of the core material (311), so that the adhered end surface of the insulating material (33) and the vacuum insulation panel (31) are in the same plane.

9. The method for preparing an insulating panel (3) according to claim 8, wherein the core material (311) of the insulating panel is configured as an integrally formed, or configured as laminated after made into unit sizes.

## Patentansprüche

1. Isolierpaneel (3) mit einem Vakuumisolationspaneel (31) und Isoliermaterial (33);
wobei das Vakuumisolationspaneel (31) ein Kernmaterial (311) und ein Beschichtungsmaterial (313) aufweist,
wobei das Kernmaterial (311) auf einer Seite eine ringförmige Nut (315) vorsieht, das Beschichtungsmaterial (313) das Kernmaterial (311) umhüllt und zwischen dem Kernmaterial (311) und dem Beschichtungsmaterial (313) ein Vakuum gebildet ist;
das Isoliermaterial (33) in der vom Beschichtungsmaterial (313) umhüllten ringförmigen Nut (315) angeordnet ist, das Isoliermaterial (33) in derselben Ebene wie das Vakuumisolationspaneel (31) angeordnet ist, und der Wärmewiderstand des Isoliermaterials (33) höher ist als der Wärmewiderstand des Beschichtungsmaterials (313);
die Oberfläche des Isoliermaterials (33) zur Befestigung an einem Kühlschrankgehäuse (11) dient;
wobei eine seitliche Endfläche der ringförmigen Nut (315) bündig mit der seitlichen Endfläche des Kernmaterials (311) ist, so dass die angeklebte Endfläche des Isoliermaterials (33) und das Vakuumisolationspaneel (31) in derselben Ebene liegen.

2. Isolierpaneel (3) nach Anspruch 1, wobei das Beschichtungsmaterial (313) als Aluminiumfolie oder Aluminium-Dampfabscheidung ausgebildet ist.

3. Isolierpaneel (3) nach Anspruch 1, wobei das Kernmaterial (311) mindestens eines der Materialien Glasfaser, Glaswolle und pyrogene Kieselsäure aufweist.

4. Isolierpaneel (3) nach Anspruch 1, wobei das Isoliermaterial (33) mindestens eines aus expandiertem Polystyrol, geschäumtem Polyurethan, expandiertem Polyethylen und expandiertem Polypropylen aufweist.

5. Isolierpaneel (3) nach Anspruch 1, wobei die Dicke der ringförmigen Nut (315) 1/2 bis 2/3 der Dicke des Kernmaterials (311) beträgt.

6. Isolierpaneel (3) nach Anspruch 1, wobei innerhalb des Kernmaterials (311) ein Adsorptionsmittel (317) vorgesehen ist.

7. Kühlschrank (1) mit einem Gehäuse (11) und einer Innenverkleidung (13), wobei ein Isolierpaneel (3) gemäß einem der Ansprüche 1 bis 6 und geschäumtes Polyurethan (5) zwischen dem Gehäuse (11) und der Innenverkleidung (13) des Kühlschranks vorgesehen sind, wobei die Oberfläche des Isoliermaterials (33) an dem Gehäuse (11) des Kühlschranks befestigt ist.

8. Verfahren zum Vorbereiten eines Isolierpaneels (3), wobei das Verfahren die folgenden Schritte umfasst: Ausbilden einer ringförmigen Nut (315) an einer Seite des vorbereiteten Kernmaterials (311); Einsetzen des Kernmaterials (311) mit der ringförmigen Nut (315) in einen vorgefertigten Beschichtungsmaterial-Beutel; Vakuum-Extrahieren und Heißsiegeln des Kernmaterials (311) und des Beschichtungsmaterial-Beutels, Erhalten eines Vakuumisolationspaneels (31) mit der ringförmigen Nut (315); Formen eines Isoliermaterials (33) entsprechend der Größe der ringförmigen Nut (315), wobei der Wärmewiderstand des Isoliermaterials (33) höher ist als der Wärmewiderstand des Beschichtungsmaterials (313); Ankleben des zugeschnittenen Isoliermaterials (33) in die ringförmige Nut (315) des Vakuumisolationspaneels (31), wobei das Isoliermaterial (33) in derselben Ebene wie das Vakuumisolationspaneel (31) ist;
die Oberfläche des Isoliermaterials (33) zur Befestigung an einem Gehäuse des Kühlschranks ausgebildet ist;
wobei eine seitliche Endfläche der ringförmigen Nut (315) bündig mit der seitlichen Endfläche des Kernmaterials (311) ist, so dass die angeklebte Endfläche des Isoliermaterials (33) und das Vakuumisolationspaneel (31) in derselben Ebene liegen.

9. Verfahren zum Vorbereiten eines Isolierpaneels (3) nach Anspruch 8, wobei das Kernmaterial (311) des Isolierpaneels entweder einstückig ausgebildet ist oder nach dem Zuschneiden in Einzelstücke als Laminat ausgebildet ist.

## Revendications

1. Panneau isolant (3), comprenant un panneau d'isolation sous vide (31) et un matériau isolant (33) ;
le panneau d'isolation sous vide (31) comprend un matériau de noyau (311) et un matériau de revêtement (313),
dans lequel le matériau de noyau (311) fournit une rainure annulaire (315) sur un côté, le matériau de revêtement (313) enveloppe le matériau de noyau (311), et un vide est formé entre le matériau de noyau (311) et le matériau de revêtement (313) ;
le matériau isolant (33) est agencé dans la rainure annulaire (315) enveloppée par le matériau de revêtement (313), le matériau isolant (33) est situé sur le même plan que le panneau d'isolation sous vide (31), et la résistance thermique du matériau isolant (33) est supérieure à la résistance thermique du matériau de revêtement (313) ;
la surface du matériau isolant (33) est utilisée pour être fixée à une coque de réfrigérateur (11) ;
dans lequel une surface d'extrémité latérale de la rainure annulaire (315) est alignée avec la surface d'extrémité latérale du matériau de noyau (311), de sorte que la surface d'extrémité collée du matériau isolant (33) et le panneau d'isolation sous vide (31) se trouvent dans le même plan.

2. Panneau isolant (3) selon la revendication 1, dans lequel le matériau de revêtement (313) est configuré comme une feuille d'aluminium ou un dépôt d'aluminium en phase vapeur.

3. Panneau isolant (3) selon la revendication 1, dans lequel le matériau de noyau (311) comprend au moins un matériau parmi fibre de verre, laine de verre et silice fumée.

4. Panneau isolant (3) selon la revendication 1, dans lequel le matériau isolant (33) comprend au moins un matériau parmi polystyrène expansé, polyuréthane expansé, polyéthylène expansé et polypropylène expansé.

5. Panneau isolant (3) selon la revendication 1, dans lequel l'épaisseur de la rainure annulaire (315) est 1/2 à 2/3 de l'épaisseur du matériau de noyau (311).

6. Panneau isolant (3) selon la revendication 1, dans lequel un adsorbant (317) est prévu à l'intérieur du matériau de noyau (311).

7. Réfrigérateur (1), comprenant une coque (11) et une doublure (13), dans lequel un panneau isolant (3) selon l'une quelconque des revendications 1 à 6 et du polyuréthane expansé (5) sont prévus entre la coque de réfrigérateur (11) et la doublure (13), la surface du matériau isolant (33) étant fixée à la coque de réfrigérateur (11).

8. Procédé de préparation d'un panneau isolant (3), comprenant le procédé comprend les étapes suivantes : la formation d'une rainure annulaire (315) sur une côté du matériau de noyau (311) préparé ; l'insertion du matériau de noyau (311) muni de la rainure annulaire (315) dans un sac de matériau de revêtement préfabriqué ; l'extraction sous vide et le thermoscellage du matériau de noyau (311) et du sac de matériau de revêtement, permettant d'obtenir un panneau d'isolation sous vide (31) muni de la rainure annulaire (315) ; le moulage d'un matériau isolant (33) en fonction des dimensions de la rainure annulaire (315), la résistance thermique du matériau isolant (33) étant supérieure à la résistance thermique du matériau de revêtement (313) ; le collage du matériau isolant (33) découpé dans la rainure annulaire (315) du panneau d'isolation sous vide (31), dans lequel le matériau isolant (33) se trouve dans le même plan que le panneau d'isolation sous vide (31) ;
la surface du matériau isolant (33) est utilisée pour être fixée à une coque de réfrigérateur ;
dans lequel une surface d'extrémité latérale de la rainure annulaire (315) est alignée avec la surface d'extrémité latérale du matériau de noyau (311), de sorte que la surface d'extrémité collée du matériau isolant (33) et le panneau d'isolation sous vide (31) se trouvent dans le même plan.

9. Procédé de préparation d'un panneau isolant (3) selon la revendication 8, dans lequel le matériau de noyau (311) du panneau isolant est configuré d'un seul tenant ou configuré en tant que stratifié après avoir été découpé en tailles unitaires.
